# EUROPÄISCHE PATENTSCHRIFT

(11) **EP 0 791 632 B1**
(45) Veröffentlichungstag und Bekanntmachung des Hinweises auf die Patenterteilung: **21.08.2002**
(21) Anmeldenummer: 97101834.6
(22) Anmeldetag: 06.02.1997
(51) Int. Cl.: C08L 59/00, C08L 67/00, C08L 77/00, C08L 23/00, C08L 101/00, C08K 7/02, C08K 5/00

(54) **Polyacetal-Formmassen mit geringerem Verschleiss**
Polyacetal resinous moulding matter having reduced wear
Compositions à mouler à base de polyacétal ayant une usure réduite

(30) Priorität: 23.02.1996 DE 19606948
(43) Veröffentlichungstag der Anmeldung: 27.08.1997
(60) Teilanmeldung: 01128212.6
(73) Patentinhaber: Ticona GmbH, 65451 Kelsterbach (DE)
(72) Erfinder: Haack, Ulrich, 64665 Alsbach-Hähnlein (DE); Kurz, Klaus, Dr., 65451 Kelsterbach (DE); Schleith, Oskar, Dr. Ing., 65719 Hofheim (DE)

(56) Entgegenhaltungen:
- EP-A- 0 124 955
- EP-A- 0 148 743
- EP-A- 0 159 904
- EP-A- 0 578 245
- FR-A- 2 554 116
- DATABASE WPI Section Ch, Week 9312 Derwent Publications Ltd., London, GB; Class A14, AN 93-096865 XP002088398 & JP 05 039405 A (STARLIGHT KOGYO KK) , 19. Februar 1993
- DATABASE WPI Section Ch, Week 8447 Derwent Publications Ltd., London, GB; Class A28, AN 84-291477 XP002088399 & JP 59 179656 A (BANDO CHEM IND LTD) , 12. Oktober 1984
- DATABASE WPI Section Ch, Week 9202 Derwent Publications Ltd., London, GB; Class A17, AN 92-014274 XP002088400 & JP 03 265646 A (OILESS IND CO LTD) , 26. November 1991
- DATABASE WPI Section Ch, Week 9344 Derwent Publications Ltd., London, GB; Class A14, AN 93-348598 XP002088401 & JP 05 255571 A (MATSUSHITA ELEC IND CO LTD), 5. Oktober 1993
- DATABASE WPI Section Ch, Week 8838 Derwent Publications Ltd., London, GB; Class A25, AN 88-268313 XP002088402 & JP 63 196646 A (SOMAR MFG CO LTD) , 15. August 1988
- DATABASE WPI Section Ch, Week 8844 Derwent Publications Ltd., London, GB; Class A23, AN 88-312293 XP002088403 & JP 63 230762 A (MITSUBOSHI BELTING LTD) , 27. September 1988
- J.E. THEBERGE: ASLE (AMER. SOC. LUBRIC. ENG.) TRANS., Bd. 15, Nr. 3, 1972, Seiten 216-224, XP002107994
- DATABASE WPI Section Ch, Week 7843 Derwent Publications Ltd., London, GB; Class A17, AN 78-77382A XP002107995 & JP 53 108142 A (TORAY IND INC) , 20. September 1978
- DATABASE WPI Section Ch, Week 9313 Derwent Publications Ltd., London, GB; Class A18, AN 93-104386 XP002107996 & JP 05 043712 A (BANDO CHEM IND LTD) , 23. Februar 1993
- PATENT ABSTRACTS OF JAPAN vol. 011, no. 075 (C-408), 6. März 1987 & JP 61 233045 A (NIPPON SEIKO KK), 17. Oktober 1986

## Beschreibung

Glasfaserverstärktes Polyoxymethylen zeigt einen hohen Verschleiß.

JP 05 039405 beschreibt Polyacetal-Formmassen, die als Gleitmittel PTFE verwenden.
JP 59 179656 beschreibt Polyacetal-Formmassen mit einem Gemisch aus mehreren Gleitmitteln wie Öle, Fettsäureestem, PTFE und Graphit.
JP 03 265646 beschreibt thermoplastische Formmassen mit PTFE als Gleitmittel.
JP 05 255571 beschreibt Polyacetal-Formmassen mit Zinkoxid-Whiskers als Verstärkungsstoff und verschiedenen Gleitmitteln, offenbart jedoch nicht ultrahochmolekulares Polyethylen als Gleitmittel.
EP 159904 beschreibt Polyacetal-Formmassen mit Kaliumtitanat-Whiskers als Verstärkungsstoff und verschiedenen Gleitmitteln. Auch hier wird ultrahochmolekulares Polyethylen als Gleitmittel nicht offenbart.
JP 63 196646 offenbart Polyacetal-Formmassen mit ultrahochmolekularem Polyethylen, gegebenenfalls in Kombination mit Fluorpolymerfasem.
Die als Verstärkungsfaser verwendeten Fluorpolymerfasem wirken gleichzeitig auch als Gleitmittel. Das problematische Verschleißverhalten von Polyacetalen, die z.B. mit Glas- oder Kohlefasem verstärkt sind, findet keine Beachtung.
Amer. Soc. Lubric. Eng. Trans. Bd. 15, Nr. 3 (1972), 216-224 beschreibt die Verwendung von Fluorpolymeren als Gleitmittel in Polyacetal-Formmassen, die mit Fasern verstärkt sind.
EP 124955 beschreibt thermoplastische Formmassen, wobei als Gleitmittel PTFE und Polyolefin mit einem Molekulargewicht von weniger als 500.000 eingesetzt wird.
In JP 53 108142 werden verschiedene kohlefaserverstärkte Thermoplasten beschrieben, wobei als Gleitmittel ein Polyolefinpulver verwendet wird, welches mit einem flüssigen Gleitmittel imprägniert ist.

Aufgabe der vorliegenden Erfindung war, die Nachteile des Standes der Technik mit einfachen Mitteln zu beheben. Überraschend wurde gefunden, daß Polyacetal-Formmassen, die ultrahochmolekulares Polyethylen und einen faserförmigen Verstärkungsstoff enthalten, einen deutlich geringeren Abrieb und eine bessere Steifigkeit aufweisen als Thermoplaste, die nur ein Gleitmittel oder einen faserförmigen Stoff enthalten.

Gegenstand der Erfindung sind somit Formmassen, die einen Thermoplasten, ein Gleitmittel und einen faserförmigen Stoff enthalten.

Polyacetale, insbesondere Polyoxymethylen, umfassen Homopolymere und Copolymere. Polyacetale sind beschrieben in "Becker/Braun, Kunststoff-Handbuch, Band 3/1, Kapitel 4 - Polyacetale, Carl Hanser Verlag München Wien 1992, Seite 300-395", worauf Bezug genommen wird.

Gleitmittel ist ultrahochmolekulares Polyethylen.

Faserförmige Stoffe oder Verstärkungsstoffe sind Mineralfasern, Glasfaser, modifizierte Glasfaser, Whiskers, Polymerfasern, Kohlenstoff-Faser, organische Hochmodulfasern. Modifizierte Glasfasern sind im allgemeinen Glasfasern, die chemisch behandelt wurden um die Haftung der Glasfaser mit dem Kunststoff zu verbessern. Zur Behandlung der Glasfaser dienen oft organische Silane. Bevorzugte faserförmige Stoffe sind modifizierte und unmodifizierte Glasfasern.

Die Formmassen gemäß der Erfindung enthalten beispielsweise 50 bis 90 Gewichtsprozent, bevorzugt 60 bis 80 Gewichtsprozent Polyacetal, 5 bis 30 Gewichtsprozent, bevorzugt 5 bis 20 Gewichtsprozent des Gleitmittels, 5 bis 40 Gewichtsprozent, bevorzugt 10 bis 30 Gewichtsprozent eines faserförmigen Stoffes, wobei die Summe der Anteile maximal 100 Gewichtsprozent ergibt. Die Formmassen können übliche Füllstoffe wie Kreide, Talk, Ton, Glimmer, Glaskugeln, Zinkoxid, Titandioxid, Wollastonit sowie weitere übliche Zusatzstoffe und Verarbeitungshilfsmittel wie Farbstoffe, Pigmente, Trennmittel, Antioxidantien, UV-Stabilisatoren enthalten. Der Anteil dieser Zusätze liegt gewöhnlich bei 0 bis 50, bevorzugt 5 bis 40 Gewichtsteile pro 100 Gewichtsteilen der Gesamtmenge.

Besonders bevorzugt werden Formmassen, die ein Polyacetal, ultrahochmolekulares Polyethylen und mindestens einen faserförmigen Stoff enthalten. Besonders vorteilhaft ist eine Formmasse, die ein Polyacetal, ultrahochmolekulares Polyethylen und unmodifizierte oder modifizierte Glasfaser enthält. Solche Formmassen zeichnen sich durch eine besonders hohe Abriebfestigkeit und Steifheit aus.

Ultrahochmolekulares Polyethylen wird als Pulver, insbesondere als Mikropulver eingesetzt. Die Pulver haben im allgemeinen einen mittleren Korndurchmesser D₅₀ im Bereich von 1 bis 5000 µm, bevorzugt 10 bis 500 µm und besonders bevorzugt 10 bis 150 µm.

Die modifizierte oder unmodifizierte Glasfaser hat im allgemeinen einen Nenndurchmesser im Bereich von 1 bis 1000 µm, bevorzugt im Bereich von 1 bis 100 µm und besonders bevorzugt im Bereich von 1 bis 20 µm. Die modifizierte oder unmodifizierte Glasfaser hat im allgemeinen eine mittlere Faserlänge im Bereich von 0,1 bis 100 mm, bevorzugt im Bereich von 1 bis 100 mm und besonders bevorzugt im Bereich von 5 bis 20 mm.

Die Formmassen gemäß der Erfindung, eignen sich besonders für folgende Verwendungen:
Kfz-Industrie:
   Gleit- und Funktionsteile in Gurtretraktorsystemen, Zahnräder und
   Funktionsteile u.a. für Scheibenwischerantrieb und Betätigungsgestänge,
   Scheibenwischerlager, Sitzverstellung, Fensterheberantrieb,
   Spiegelverstellung,Schiebedächer.
Allg. Maschinenbau und Feinwerktechnik:
   Transportketten, Zahnstangen und Zahnräder (u.a. für Antriebselemente),
   Verstellmechanismen, Lagerbuchsen und Funktionsteile (u.a. für Eisenbahnen, Seilbahnen).
Möbelindustrie:
   Scharniere (u.a. für Schränke, Schreibtische), Gleitlagerböcke, Rollen und
   Verschleißleisten (u.a. für Schubladen, Schiebetüren).
Kleingeräte:
   Zahnräder im Getriebebereich bei Küchenmaschinen, Fleischwolf, Handmixer, Zerkleinerer, Entsafter, Zitruspressen, Körnerquetsche, Allesschneider.
Weißgeräte:
   Türschanier für Geschirrspüler, Waschmaschinen und Trockner, Funktionsteile für Riemenspanner bei Wäschetrockner, Einzelteile für Stoßdämpfer, Waschmaschine, Gehäuse für Türbremse bei Geschirrspüler, Riemenrad für Wäschetrockner.
Elektro-Werkzeuge (bevorzugt Heimwerkerbereich):
   Zahnräder für elektrische Rasenpflege-Geräte, Rasenmäher, Grasschere,
   Zahnräder für elektrische Heckenscheren und Kettensägen, Funktionsteile in Häckslern.

Weitere Anwendungen sind: Lagerböcke, Funktionsteile für elektrische Epilier-Geräte, Düsenteile für Staubsauger, Funktionsteile für Rasierer, Bartschneider, Haarschneidegeräte, Outsert-Anwendungen (steife Gleitlager).

### Beispiele

Für die Beispiele 1 bis 3 und die Vergleichsbeispiele A und B wurde ein Copolymerisat aus Trioxan mit Dioxolan mit einem Schmelzindex MFR 190/2,16 von 2,5 g/10 min (®Hostaform C 2521) verwendet. Das Copolymerisat wurde mit folgenden Zusatzstoffen versetzt:
PE-UHMW Mikropulver, mittlerer Korndurchmesser 120 µm, Viskositätszahl nach DIN 53 728-4 = 2300 ml/g.
Schnittglasfaser, Nenndurchmesser der Filamente ca. 13 µm, mittlere Faserlänge ca. 4,5 mm.

Das Copolymerisat wurde mit den aufgeführten Zuschlägen in einem langsam laufenden Mischer vermischt, anschließend einem Doppelschneckenextruder Typ ZSK 25 (Firma Werner u. Pfleiderer, Stuttgart, Bundesrepublik Deutschland) zugeführt und bei einer Massetemperatur von ca. 200°C aufgeschmolzen und in Granulatform gebracht.

Nach Trocknung in einem Umlufttrockenschrank, acht Stunden bei 120°C, wurden die Probekörper zur Prüfung der mechanischen, thermischen und tribologischen Eigenschaften auf einer Spritzgußmaschine Typ KM 90/210 B (Firma Krauss Maffei, München, Bundesrepublik Deutschland) hergestellt. Die Verarbeitungsbedingungen wurden nach den Empfehlungen der Stoffnorm für Polyoxymethylen ISO 9988-2 gewählt.

Gemessen wurden:
Zug-E-Modul nach ISO 527 Teil 1 und 2
Wärmeformbeständigkeit HDT / A nach ISO 75 Teil 1 und 2
Charpy Schlagzähigkeit nach ISO 179 1eU

### Verschleißmessung:

Der Abrieb wurde nach dem Testprinzip "pin on ring" nach ISO/DIS 7148-2 gemessen. Auf einer rotierenden Welle werden zylindrische Probekörper mit 12 mm Durchmesser aus dem zu prüfenden Werkstoff aufgepreßt und in Abhängigkeit von der Zeit das Verschleißvolumen an den Probekörpern bestimmt.

Die Prüfbedingungen waren wie folgt:

| | |
|---|---|
| Werkstoff Welle | Stahl |
| Wellendurchmesser | 65 mm |
| Rauhtiefe Rz | 0,8 µm |
| Belastung | 3,1 N |
| Gleitgeschwindigkeit | 136 m/min |
| Versuchsdauer | 60 h |

**Tabelle 1:**

| Bestimmung des Verschleißvolumens, des Zug-E-Moduls und der Wärmeformbeständigkeit sowie der Charpy Schlagzähigkeit | | | | | | |
|---|---|---|---|---|---|---|
| Beispiele | | A | B | 1 | 2 | 3 |
| POM-Copolymer | Gew.-% | 74 | 90 | 80 | 70 | 60 |
| Glasfaser | Gew.-% | 26 | - | 10 | 20 | 30 |
| PE-UHMW | Gew.-% | - | 10 | 10 | 10 | 10 |
| Verschleißvolumen | mm³ | 32 | 1 | 2,8 | 3 | 3,5 |
| Zug-E-Modul ISO 527 | N/mm² | 9000 | 2200 | 4000 | 6500 | 8900 |
| Wärmeformbeständigkeit | | | | | | |
| HDT/A ISO 75 | °C | 160 | 85 | 116 | 135 | 140 |
| Charpy Schlagzähigkeit ISO 179 | mJ/mm² | 30 | 50 | 32 | 24 | 12 |

Für die Beispiele 4 bis 5 wurde ein Copolymerisat aus Trioxan mit Dioxolan mit einem Schmelzindex MFR 190/2,16 von 9,5 g/10 min (®Hostaform C 9021) verwendet. Das Copolymerisat wurde mit folgenden Zusatzstoffen versetzt:
PE-UHMW Mikropulver, mittlerer Korndurchmesser 120 µm, Viskositätszahl nach DIN 53 728-4 = 2300 ml/g.

Modifizierte Schnittglasfaser, Typ RES03-TP33G (Firma Nippon Glas Fiber Co., Komoricho Takachya, Japan), Nenndurchmesser der Filamente ca. 10 µm, mittlere Faserlänge ca. 3 mm. Die Glasfaser ist silanisiert und mit Polyurethan behandelt.

Die Probekörper zur Prüfung der mechanischen, thermischen und tribologischen Eigenschaften wurden nach dem gleichen Verfahren und unter den gleichen Verarbeitungsbedingungen wie die Beispiele 1 bis 3 und die Vergleichsbeispiele A und B hergestellt.

Gemessen wurden:
Zug-E-Modul nach ISO 527 Teil 1 und 2
Wärmeformbeständigkeit HDT / A nach ISO 75 Teil 1 und 2
Verschleißmessung wie für die Beispiele 1 bis 3 und die Vergleichsbeispiele A und B beschrieben.

**Tabelle 2:**

| Bestimmung des Verschleißvolumens, des Zug-E-Moduls und der Wärmeformbeständigkeit | | | |
|---|---|---|---|
| Beispiele | | 4 | 5 |
| POM-Copolymer | Gew.-% | 85 | 69 |
| Glasfaser | Gew.-% | 10 | 26 |
| PE-UHMW | Gew.-% | 5 | 5 |
| Verschleißvolumen | mm³ | 1,5 | 1,9 |
| Zug-E-Modul ISO 527 | N/mm² | 4400 | 8800 |
| Wärmeformbeständigkeit | | | |
| HDT/A ISO 75 | °C | 155 | 162 |

## Patentansprüche

1. Polyoxymethylen-Formmasse enthaltend 50-90 Gew.-% eines Polyacetal-Homo- oder Copolymeren, 5-30 Gew.-% ultrahochmolekulares Polyethylen , 5-40 Gew.-% eines faserförmigen Materials ausgewählt aus der Gruppe Glasfasern, Kohlefasern, mineralische Fasern, Whiskers, modifizierter Glasfasern, Polymerfasern mit Ausnahme von Fluorpolymerfasern, organische Hochmodulfasern, und gegebenenfalls weiteren Zusatzstoffen.

2. Polyoxymethylen-Formmasse enthaltend 60-80 Gew.-% eines Polyacetal-Homo- oder Copolymeren, 10-30 Gew.-% ultrahochmolekulares Polyethylen, 5-20 Gew.-% eines faserförmigen Materials ausgewählt aus der Gruppe Glasfasern, Kohlefasern, mineralische Fasern, Whiskers, modifizierter Glasfasern, Polymerfasern mit Ausnahme von Fluorpolymerfasern, organische Hochmodulfasern und gegebenenfalls weiteren Zusatzstoffe.

3. Polyoxymethylen-Formmasse nach Anspruch 1 oder 2, wobei das verwendete Mikropulver aus ultrahochmolekularem Polyethylen einen mittleren Korndurchmesser von 10 bis 5000 µm besitzt.

4. Verwendung der Formmassen nach einem oder mehreren der Ansprüche 1 bis 3 zur Herstellung von Formteilen mit verbesserter Abriebfestigkeit, insbesondere von Zahnrädem, Zahnstangen, Lager, Antriebselemente, Rollen, Ketten, Schiebeelementen.

5. Formkörper mit verbesserter Abriebfestigkeit enthaltend eine Formmasse nach einem oder mehreren der Ansprüche 1 bis 3.

## Claims

1. A polyoxymethylene molding composition comprising 50-90% by weight of a polyacetal homopolymer or copolymer, 5-30% by weight of ultrahigh-molecular-weight polyethylene, 5-40% by weight of a fibrous material selected from the group consisting of glass fibers, carbon fibers, mineral fibers, whiskers, modified glass fibers, polymer fibers with the exception of fluorinated polymer fibers, organic high-modulus fibers, and, if desired, further additives.

2. A polyoxymethylene molding composition comprising 60-80% by weight of a polyacetal homopolymer or copolymer, 10-30% by weight of ultrahigh-molecular-weight polyethylene, 5-20% by weight of a fibrous material selected from the group consisting of glass fibers, carbon fibers, mineral fibers, whiskers, modified glass fibers, polymer fibers with the exception of fluorinated polymer fibers, organic high-modulus fibers, and, if desired, further additives.

3. A polyoxymethylene molding composition as claimed in claim 1 or 2, where the ultrahigh-molecular-weight polyethylene micropowder used has a mean particle diameter of from 1 to 5000 µm.

4. The use of a molding composition as claimed in one or more of claims 1 to 3 for the production of molded parts having improved abrasion resistance, in particular of gear wheels, toothed racks, bearings, drive elements, rollers, chains and sliding elements.

5. A molding having improved abrasion resistance, comprising a molding composition as claimed in one or more of claims 1 to 3.

## Revendications

1. Masse de moulage de polyoxyméthylène contenant 50 à 90% en poids d'un homopolymère ou d'un copolymère de polyacétal, 5 à 30% en poids d'un polyéthylène de poids moléculaire très élevé, 5 à 40% en poids d'un matériau en forme de fibres choisi parmi le groupe des fibres de verre, des fibres de carbone, des fibres minérales, des barbes, des fibres de verre modifiées, des fibres de polymère à l'exception de fibres de fluoropolymères, de fibres organiques à module élevé et le cas échéant d'autres additifs.

2. Masse de moulage de polyoxyméthylène contenant 60 à 80% en poids d'un homopolymère ou d'un copolymère de polyacétal, 10 à 30% en poids d'un polyéthylène de poids moléculaire très élevé, 5 à 20% en poids d'un matériau en forme de fibres choisi parmi le groupe des fibres de verre, des fibres de carbone, des fibres minérales, des barbes, des fibres de verre modifiées, des fibres de polymère, à l'exception de fibres de fluoropolymères, de fibres organiques à module élevé et le cas échéant d'autres additifs.

3. Masse de moulage de polyoxyméthylène selon la revendication 1 ou 2, la micropoudre utilisée en polyéthylène de poids moléculaire très élevé présentant un diamètre moyen des granules de 1 à 5000 µm.

4. Utilisation des masses de moulage selon l'une ou plusieurs des revendications 1 à 3 pour la fabrication de pièces moulées présentant une meilleure résistance à l'usure, en particulier de roues dentées, de crémaillères, de paliers, d'éléments d'entraînement, de galets, de chaînes, d'éléments curseurs.

5. Corps moulé présentant une meilleure résistance à l'usure contenant une masse de moulage selon l'une ou plusieurs des revendications 1 à 3.
